# FASCICULE DE BREVET EUROPEEN

(11) **EP 2 412 141 B1**
(45) Date de publication et mention de la délivrance du brevet: **11.11.2020**
(21) Numéro de dépôt: 10716569.8
(22) Date de dépôt: 22.03.2010
(51) Int. Cl.: H04L 29/06

(54) **PROCÉDÉ ET DISPOSITIF DE TRAITEMENT D'UNE INFORMATION INDICATRICE D'UN SOUHAIT D'IMPLICATION DANS AU MOINS UNE SESSION APPLICATIVE D'UN UTILISATEUR**
VERFAHREN UND EINRICHTUNG ZUM VERARBEITEN EINES INFORMATIONSELEMENTS, DAS DEN WUNSCH ANGIBT, AN MINDESTENS EINER BENUTZERANWENDUNGSSITZUNG BETEILIGT ZU SEIN
METHOD AND DEVICE FOR PROCESSING A PIECE OF INFORMATION INDICATIVE OF A DESIRE TO BE INVOLVED IN AT LEAST ONE USER APPLICATION SESSION

(30) Priorité: 24.03.2009 FR 0951885
(43) Date de publication de la demande: 01.02.2012
(73) Titulaire: 3G Licensing S.A., 2132 Luxembourg (LU)
(72) Inventeur: MOUQUET, Antoine, F-92400 Courbevoie (FR); CHADLI, Youssef, F-78800 Houilles (FR)
(74) Mandataire: Metroconsult Srl
(86) Numéro de dépôt international: PCT/FR2010/050515
(87) Numéro de publication internationale: WO 2010/109125

(56) Documents cités:
- EP-A- 1 330 098
- WO-A-2008/092348
- WO-A-2008/145026

## Description

### Domaine de l'invention

Le domaine de l'invention est celui des réseaux de télécommunications, et plus particulièrement des interactions entre différents terminaux d'un utilisateur client de ces réseaux.

La présente invention concerne un procédé de traitement d'un souhait d'implication d'un deuxième terminal dans au moins une session applicative en cours pour un utilisateur sur un premier terminal.

L'invention s'applique de manière particulièrement avantageuse aux réseaux IP permettant la distribution de contenus audiovisuels ainsi qu'au domaine des architectures à contrôle de session SIP (« Session Initiation Protocol ») de type IMS proposées par les organismes de normalisation 3GPP (« 3rd Generation Partnership Project ») et TISPAN (« Telecommunications and Internet converged Services and Protocols for Advanced Networking »).

L'IMS est une architecture de réseau introduite par le 3GPP pour les réseaux mobiles, puis reprise par TISPAN pour les réseaux fixes. Cette architecture permet l'établissement dynamique et le contrôle de sessions multimédia entre deux clients ainsi que la réservation de ressources au niveau du réseau de transport des flux médias. Elle gère aussi l'interaction de services.

On considère un utilisateur client d'un réseau de télécommunications d'un opérateur. Dans la norme 3GPP, cet utilisateur peut utiliser plusieurs terminaux, fixes ou mobiles, pour une même souscription à un service fourni par l'opérateur. Dans la terminologie 3GPP, un terminal est appelé UE (User Equipement).

On suppose que cet utilisateur a une session applicative en cours dans le réseau de télécommunications. A titre d'exemple, il est en communication avec un correspondant sur un de ses terminaux UEs. Actuellement, l'état de l'art au 3GPP permet à cet utilisateur, de transférer un ou plusieurs flux de cette communication (lorsque celle-ci comporte plusieurs flux, un flux audio et un flux vidéo par exemple) sur un autre terminal UE. Ainsi, un utilisateur ayant commencé un appel sur son terminal mobile et qui arrive à son bureau, peut transférer le flux voix sur son terminal fixe, de façon transparente, c'est-à-dire sans interruption pour son correspondant.

Toutefois, une contrainte de la technique actuellement spécifiée au 3GPP dans le cadre du transfert de session applicative est que, pour une session multimédia donnée, un seul terminal, dit "Controller UE" (terminal contrôleur), a le contrôle du service. En d'autres termes, seul ce terminal contrôleur peut initier le transfert d'un flux média vers un autre terminal.

Selon le document TR 23.838, lorsqu'un UE participe à l'établissement d'une communication, il est contrôleur de cette communication. Lorsque ce terminal décide, sur action de l'utilisateur, de transférer la communication ou un ou plusieurs flux composant cette communication à un autre terminal, il peut décider soit de transférer le contrôle, soit de le garder. Le terminal peut également transférer le contrôle de la communication à un autre terminal, dit terminal cible, sans transférer de flux.

L'utilisateur ne peut pas demander un transfert en interagissant avec un autre terminal que le terminal contrôleur. Ainsi, dans l'exemple précédent, le transfert peut être demandé par l'utilisateur en interagissant avec son téléphone mobile (qui est alors contrôleur), mais pas en appuyant sur une touche du téléphone fixe.

WO 2008/145026 décrit une méthode et un système de mobilité de session. Le procédé comprend les étapes suivantes: un transfert d'une session d'un terminal de transfert à un terminal transféré est demandé; un contrôleur de transfert de média reçoit la requête; le contrôleur de transfert de média transfère la session au terminal transféré en négociant avec un relais multimédia.

Il existe toutefois des situations où il serait préférable pour l'utilisateur de pouvoir contrôler le transfert de session depuis le terminal cible. On considère, par exemple, le cas d'un utilisateur qui a reçu un lien vers un clip vidéo sur son terminal mobile. Il est en train de visualiser ce clip au moment où il rentre à son domicile. On suppose que des membres de la famille de l'utilisateur se joignent à lui pour le visualiser. C'est alors qu'avant la fin du clip, l'utilisateur reçoit un appel important sur son terminal mobile. Il prend l'appel aussitôt. Cependant, les autres membres de sa famille souhaiteraient continuer à visualiser le clip. Or, ce n'est pas possible de le faire depuis un autre terminal que le terminal mobile contrôleur de la session applicative en cours.

### Exposé de l'invention

L'invention permet de remédier à cet inconvénient à l'aide d'un procédé de traitement d'une information indicatrice d'un souhait d'implication dans au moins une session applicative établie selon le protocole SIP, en cours pour un utilisateur d'un réseau de télécommunications, ladite au moins une session étant contrôlée par un premier terminal dudit utilisateur.

Selon l'invention, ledit procédé, mis en œuvre par le premier terminal contrôleur, comprend les étapes de la revendication 1.

L'invention permet ainsi à un utilisateur d'un réseau de télécommunications publiques d'un opérateur d'exprimer son souhait d'implication dans une session applicative en cours, directement depuis le terminal sur lequel il souhaite recevoir le flux média transféré. Selon l'invention, il n'a pas besoin d'émettre une requête explicite d'implication au réseau, mais seulement de faire connaître ses intentions qui seront notifiées au moins au terminal contrôleur de la session en cours.

En effet, l'invention s'appuie sur une extension d'un mécanisme de souscription/notification d'événement relatif à l'utilisateur, qui permet de notifier le terminal contrôleur de la session en cours d'un changement relatif à un état de l'utilisateur sur un autre terminal, et notamment d'un changement concernant un souhait d'implication de cet autre terminal de l'utilisateur dans la session en cours.

Le terminal contrôleur prend connaissance des nouvelles intentions de l'autre terminal d'utilisateur, par réception d'une notification d'événement relatif à un état de l'utilisateur sur cet autre terminal. Il décide alors s'il est possible de satisfaire le souhait d'implication exprimé par l'autre terminal en fonction de critères prédéterminés. On comprend qu'il peut décider de refuser, satisfaire partiellement ou satisfaire complètement la requête indirecte de l'autre terminal de l'utilisateur. Une fois sa décision prise, il met en œuvre l'action correspondant à sa décision, en envoyant une commande adaptée au réseau.

L'invention propose ainsi une approche nouvelle et inventive pour résoudre le problème de la prise en compte par le réseau d'un souhait d'implication dans une session en cours d'un terminal d'utilisateur qui n'est pas le terminal contrôleur de la session applicative en cours, tel que défini dans l'architecture IMS.

Selon un premier aspect de l'invention, ladite information indicatrice d'un souhait d'implication concerne un souhait d'être la cible d'un transfert d'au moins un type de flux média. On comprend que le terminal requérant souhaite à recevoir tout ou partie des flux média échangés pendant la session applicative. A titre d'exemple, un terminal téléviseur pourrait faire notifier son souhait d'implication de se voir transférer un flux vidéo, alors que le flux audio serait demandé par un autre terminal plus adapté de l'utilisateur, par exemple une chaîne hifi..

Selon un deuxième aspect de l'invention, ladite information indicatrice d'un souhait d'implication dans une session concerne un souhait de prendre le contrôle de la session. A titre d'exemple, lorsqu'un utilisateur rentre à son domicile et demande le transfert des flux d'une session en cours sur son terminal mobile vers au moins un terminal fixe, il peut souhaiter contrôler la session depuis ce terminal fixe.

Bien entendu ces deux types de souhait peuvent se cumuler dans la même notification d'évènement.

Selon un premier mode de réalisation de l'invention, suite à la souscription préalable à un mécanisme de notification d'événement relatif à un état de l'utilisateur par le premier terminal auprès d'un serveur de présence du réseau de télécommunications, la notification d'événement est reçue dudit serveur de présence. Un premier avantage de cette solution est de bénéficier du mécanisme de présence spécifié dans le document RFC 3856 lorsqu'il est déjà mis en place pour d'autres services, tel que la découverte d'autres utilisateurs enregistrés dans le réseau ou un service de messagerie instantanée (Instant Messaging, en anglais). Un deuxième avantage est qu'elle prévoit une notification des différents terminaux d'un même utilisateur par le réseau, ce qui permet de ne pas accroître la complexité de traitement au niveau des terminaux. Les terminaux de l'utilisateur publient, auprès du serveur de présence, des informations relatives à un état de l'utilisateur dans le réseau. Selon l'invention, le deuxième terminal publie en particulier une information indicatrice d'un souhait d'implication dans au moins une session en cours. Cette information est notifiée aux terminaux qui ont préalablement souscrit au mécanisme de notification précédemment évoqué auprès de ce serveur de présence, apte à leur notifier tout changement d'état de l'utilisateur.

Selon un deuxième aspect de l'invention, suite à la souscription à un mécanisme de notification d'événement auprès du deuxième terminal, la notification d'évènement est reçue du deuxième terminal.

Le terminal contrôleur de l'utilisateur souscrit au mécanisme de notification précédemment évoqué directement auprès de chacun des autres terminaux de l'utilisateur qui sont enregistrés dans le réseau. Un avantage de cette solution est qu'elle ne requiert pas l'utilisation d'un serveur de présence du réseau de télécommunications pour gérer la souscription/notification d'événements.

On notera que les terminaux d'un utilisateur sont, selon les spécifications de l'architecture IMS, obligés de souscrire à un mécanisme de notification (Reg Event) d'un état d'enregistrement d'une identité publique de l'utilisateur dans le réseau, qui leur permet d'être informés en cas de désenregistrement de cette identité par le réseau. Ils sont aussi informés des identités des autres terminaux du même utilisateur, enregistrés simultanément dans le réseau. Ils peuvent donc utiliser ces identités pour souscrire auprès de chacun de ces terminaux au mécanisme de notification d'événement d'un état de l'utilisateur selon l'invention.

L'invention concerne aussi un dispositif de traitement selon la revendication 6.

L'invention concerne également un procédé selon la revendication 7.

Un tel procédé est avantageusement mis en œuvre par le deuxième terminal pour faire connaître au terminal contrôleur son souhait de s'impliquer dans une session en cours, par exemple de devenir ou non la cible d'un transfert d'au moins un type de flux média ou de prendre le contrôle de la session.

Selon l'invention, le deuxième terminal n'a pas besoin de connaître les sessions en cours. Il fait simplement connaître son souhait d'être la cible d'un transfert d'un type de flux média et/ou du contrôle d'au moins une session. Libre à lui, lorsqu'il recevra un flux média du type demandé de l'accepter ou de le refuser.

Selon un premier aspect de l'invention, ladite notification d'événement est publiée auprès d'un serveur de présence apte à la transmettre à des terminaux de l'utilisateur y ayant préalablement souscrit.

On notera que le deuxième terminal n'a lui-même pas besoin d'avoir préalablement souscrit auprès du serveur de présence, pour publier sa présence auprès de lui.

Selon un deuxième aspect de l'invention, suite à la réception préalable d'une demande de souscription à un mécanisme de notification d'événement par le premier terminal auprès du deuxième terminal, la notification d'événement est envoyée audit premier terminal. Selon ce mode de réalisation de l'invention, le deuxième terminal notifie directement les terminaux qui ont souscrit auprès de lui à la notification d'événement relatif à un état de l'utilisateur.

Selon un autre aspect de l'invention, le procédé comprend une étape d'obtention d'informations comprenant une liste d'identifiants de sessions applicatives en cours entre ledit utilisateur et le réseau et l'étape d'émission d'une information indicatrice d'un niveau d'implication souhaité par le deuxième terminal comprend l'identifiant de la session applicative ciblée. Le deuxième terminal est informé de la liste des sessions en cours de façon à pouvoir choisir le ou les flux média qui l'intéressent parmi ceux qui sont disponibles et/ou au moins une session particulière dont il souhaite prendre le contrôle. Il peut avantageusement l'obtenir via le mécanisme de souscription/notification étendu selon l'invention, soit auprès du serveur de présence, soit directement auprès de chaque terminal, selon le mode de réalisation de l'invention considéré.

L'invention concerne aussi un dispositif d'implication selon la revendication 11.

L'invention concerne aussi un terminal d'un utilisateur d'un réseau de télécommuniations selon la revendication 12.

L'invention concerne en outre un serveur de présence dans un réseau de selon la revendication 13.

Dans un mode particulier de réalisation, les différentes étapes du procédé de traitement d'une information indicatrice d'un souhait d'implication dans une session applicative en cours selon l'invention sont déterminées par des instructions de programmes d'ordinateurs.

En conséquence, l'invention vise aussi un programme d'ordinateur sur un support d'informations, ce programme étant susceptible d'être mis en oeuvre dans un dispositif d'acheminement, de réception ou de transmission ou plus généralement dans un ordinateur, ce programme comportant des instructions adaptées à la mise en œuvre des étapes d'un procédé de traitement d'une information indicatrice d'un souhait d'implication tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Dans un mode particulier de réalisation, les différentes étapes du procédé d'implication dans une session applicative en cours selon l'invention sont déterminées par des instructions de programmes d'ordinateurs.

En conséquence, l'invention vise aussi un programme d'ordinateur sur un support d'informations, ce programme étant susceptible d'être mis en œuvre dans un dispositif d'acheminement, de réception ou de transmission ou plus généralement dans un ordinateur, ce programme comportant des instructions adaptées à la mise en oeuvre des étapes d'un procédé d'implication tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1 illustre de façon schématique le cas d'un utilisateur disposant d'une pluralité de terminaux enregistrés dans un réseau de télécommunications impliqué dans une session applicative sur un premier terminal contrôleur de la session et souhaitant demander à s'impliquer dans la session, depuis un deuxième terminal, selon l'invention ;
- la figure 2 présente de façon schématique le procédé d'implication dans une session applicative en cours selon l'invention;
- la figure 3 présente de façon schématique la structure d'un dispositif d'implication dans au moins une session applicative selon l'invention et la structure d'un dispositif de traitement d'une information indicatrice d'un souhait d'implication dans au moins une session selon l'invention;
- la figure 4 présente de façon schématique le procédé de traitement d'une information indicatrice d'un souhait d'implication dans au moins une session applicative en cours selon l'invention;
- les figures 5 et 6 présentent les diagrammes des flux échangés entre les terminaux d'un utilisateur et le réseau de télécommunication dans un premier exemple de mise en œuvre du premier mode de réalisation de l'invention;
- les figures 7 et 8 présentent les diagrammes des flux échangés entre les terminaux d'un utilisateur et le réseau de télécommunication dans un deuxième exemple de mise en œuvre du premier mode de réalisation de l'invention; et
- les figures 9, 10 et 11 présentent les diagrammes des flux échangés entre les terminaux d'un utilisateur et le réseau de télécommunication dans un exemple de mise en œuvre du deuxième mode de réalisation de l'invention.

### Description d'un mode de réalisation particulier de l'invention

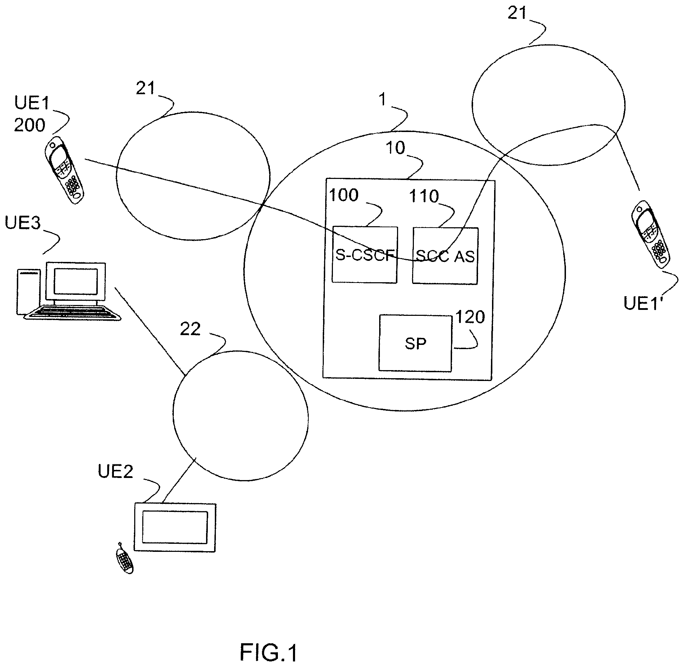

En relation avec la **figure 1**, on considère un utilisateur A d'un réseau de télécommunications 1. Cet utilisateur A dispose d'une pluralité de terminaux UE₁, UE₂, UE₃ enregistrés dans le réseau. Ces terminaux peuvent être des terminaux mobiles ou fixes de types variés, comme par exemple un téléviseur, un PC, un téléphone mobile ou un téléphone fixe, pourvu qu'ils disposent d'une connexion IP au réseau de télécommunications 1. On suppose que le terminal UE₁ est un terminal mobile, tel que par exemple un téléphone mobile, assistant personnel digital PDA, smartphone, etc et que les terminaux UE₂ et UE₃ sont des terminaux fixes tels que, par exemple, un téléphone fixe, un ordinateur PC, un poste de télévision et un lecteur audio.

On suppose que les terminaux UE₁, UE₂ et UE₃ accèdent au réseau de télécommunications 1 via des réseaux d'accès 21, 22. Le réseau d'accès 21 est par exemple un réseau d'accès mobile de type UMTS, GSM, GPRS, UMTS, I-WLAN, etc.) et dans ce cas, le terminal UE₁ accède au réseau de télécommunications 1 via une station de base radio ou bien dans le cas I-WLAN via un point d'accès Wifi. On suppose que le réseau d'accès 22 est un réseau d'accès fixe de type x-DSL, FTTH, etc et que les terminaux fixes UE₂ et UE₃ accèdent au réseau 1 via une passerelle résidentielle ou un modem routeur.

On notera que l'invention n'est pas limitée à ces exemples de technologies d'accès ni de types de terminaux et que l'invention s'étend à toute autre technologie d'accès permettant à tout type de terminal IP de se connecter au réseau de télécommunications 1.

On suppose que l'utilisateur A a souscrit un abonnement auprès de l'opérateur du réseau de télécommunications 1 qui lui permet d'ouvrir une ou plusieurs sessions multimédia avec le réseau 1. Par session multimédia, on désigne toute période de communication continue pendant laquelle un utilisateur accède à un ou plusieurs médias, comme de la voix, du texte, de l'image, de la vidéo ou autre, à partir d'un terminal. A titre d'exemple, une session multimédia peut correspondre à une simple conversation téléphonique, une visiocommunication, la diffusion d'un programme audiovisuel, une conversation sur messagerie instantanée, etc. On notera qu'une telle session multimédia peut impliquer un ou plusieurs autres utilisateurs.

Le réseau de télécommunications 1 comprend un système applicatif 10 destiné à gérer l'établissement et le suivi de toutes les sessions multimédias concernant l'utilisateur sur son terminal (session initiée ou session à destination de l'utilisateur comme dans le cas d'une session entrante destinée à l'utilisateur). Le système applicatif 10 peut par exemple être un système du sous-domaine IP Multimédia ou IMS ("IP Multimédia Subsystem", en anglais) qui est une architecture connue standardisée pour les réseaux de nouvelle génération NGN ("Next Generation Networking", en anglais) pour les opérateurs de télécommunications et qui permet de fournir des services multimédias fixes et mobiles. Ce système s'appuie sur différentes technologies de transport de flux média parmi lesquelles la technologie voix sur réseau IP ("Internet Protocol", en anglais) basée sur une implémentation 3GPP ("3rd Generation Partnership Project", en anglais) standardisée du protocole de signalisation SIP ("Session Initiation Protocol", en anglais) fonctionnant sur un protocole standard IP. L'architecture IMS supporte les systèmes téléphoniques existants et permet aux utilisateurs d'utiliser des services multimédias aussi bien en déplacement dans un environnement extérieur (situation de "roaming") que depuis un environnement domestique. A cet effet, l'architecture IMS utilise les protocoles standards IP, définis par l'IETF ("Internet Engineering Task Force", en anglais).

L'architecture d'un système IMS, les différentes entités d'un tel système, l'enregistrement des équipements des utilisateurs auprès d'un système IMS ainsi que l'établissement d'une session multimédia dans un système IMS sont notamment décrits en détails dans les documents 3GPP TS 23.228 V8.8.0 (2009-03), 3rd Generation Partnership Project; Technical Specification Group Services and System Aspects; IP Multimedia Subsystem (IMS) ; Stage 2 (Release 8)>>disponible à l'adresse web http://www.3app.org/ftp/specs/archive/23_series/23.228/, et << 3GPP TS 24.229 V8.6.0 (2008-12), 3rd Generation Partnership Project; Technical Spécification Group Core Network and Terminais; IP multimedia call control protocol based on Session Initiation Protocol (SIP) and Session Description Protocol (SDP) ; Stage 3 (Release 8)>> disponible à l'adresse web http://www.3gpp.org/ftp/Specs/archive/24_series/24.229/. Le protocole SIP est décrit dans le document RFC 3261 du groupe de travail IETF (groupe de travail sur le réseau Internet, ou Internet Engineering Task Force), disponible à l'adresse Internet http://www.ietf.org/rfc.

Après s'être connecté au réseau de communication 1, l'utilisateur A s'enregistre auprès du système applicatif 10. Plus précisément, pour pouvoir disposer des services multimédias auxquels l'utilisateur A a souscrit auprès de son opérateur, l'utilisateur A s'enregistre à l'IMS qui est l'instanciation du système applicatif choisie dans cet exemple. L'attachement à l'IMS se fait par l'enregistrement de l'utilisateur via la méthode SIP "Register" telle que définie dans le RFC 3261 spécifié par l'IETF. Une des données utilisée en paramètre est l'identité publique de l'utilisateur qui sert à identifier cet utilisateur auprès des utilisateurs tiers (l'utilisateur peut disposer de plusieurs identités publiques). L'enregistrement de l'utilisateur dans le système applicatif 10 lui permet de recevoir notamment des demandes d'établissement de sessions multimédias initiées par des utilisateurs tiers (provenant indifféremment d'un réseau fixe ou mobile) telle qu'une demande d'établissement d'une session conversationnelle ("chat") par exemple.

On considère par exemple le cas où un utilisateur a une session applicative en cours, depuis son terminal mobile avec un autre utilisateur du réseau de communication. On suppose que l'utilisateur lui a envoyé un clip vidéo qu'il vient de télécharger et qu'il souhaite maintenant visualiser. Comme il vient de rentrer à son domicile, l'utilisateur A souhaiterait visualiser le clip vidéo depuis son téléviseur pour en faire profiter d'autres membres de sa famille et commander le transfert de flux à l'aide de la télécommande de son téléviseur.

Les procédures permettant de transférer des flux médias entre différents terminaux d'un même utilisateur, dans un réseau IMS, sont décrites dans le document TR 23.838. L'orchestration de ce service est assurée par un serveur d'application dédié SCC AS 110. Il s'agit du service d'application en charge de la continuité de service ("Service Centralization and Continuity Application Server" ou SCC AS, en anglais). L'architecture IMS est décrite dans la TS. 23.228. L'utilisation détaillée de SIP dans l'architecture IMS est décrite dans la TS 24.229.

Or, comme précédemment évoqué, le 3GPP impose selon la TR 23.838 qu'un seul terminal ait le contrôle d'une session multimédia en cours. Dans le cas présent, il s'agit du terminal mobile UE1. Il n'est donc pas possible selon la norme 3GPP que le téléviseur demande le transfert de la session en cours sur le terminal mobile de l'utilisateur.

L'invention permet à un autre terminal de l'utilisateur A de faire connaître au terminal contrôleur UE₁ son souhait de s'impliquer dans la session en cours sur le terminal contrôleur UE₁. Elle repose sur un mécanisme de notification d'évènements entre les terminaux de l'utilisateur. Ce mécanisme de notification d'évènements peut être mis en œuvre à l'aide de messages de signalisation SIP SUBSCRIBE/NOTIFY tels que définis dans le document RFC 3265. La TR 23.838 décrit plusieurs solutions basées sur ce mécanisme qui permettent aux terminaux d'un utilisateur de découvrir les autres terminaux enregistrés de l'utilisateur et de connaître leur disponibilité ainsi que les types de média qu'ils supportent.

L'invention consiste à étendre ce mécanisme pour permettre à un terminal de l'utilisateur d'indiquer aux autres terminaux de cet utilisateur son souhait d'être la cible d'un transfert d'au moins un flux média d'une session en cours et/ou de prendre le contrôle d'au moins une session. L'invention consiste donc à échanger via le mécanisme SUBSCRIBE/NOTFY des informations permettant à un terminal d'indiquer son souhait de récupérer soit le contrôle d'au moins une session en cours, soit un, plusieurs ou tous les flux de cette session, soit à la fois le contrôle et un ou plusieurs flux: Un terminal qui veut devenir la cible d'un transfert met à jour l'information de son état avec une valeur particulière qui signifie qu'il souhaite être la cible d'un transfert. Cette valeur particulière peut comporter en outre un indicateur précisant si le terminal veut se voir transférer le contrôle de la communication, et une liste de types de médias qu'il veut se voir transférer. On notera qu'il peut demander seulement le transfert du contrôle d'une session en cours.

De façon avantageuse, l'invention permet en outre à un terminal impliqué dans une ou plusieurs sessions de communiquer son implication aux autres terminaux. Pour chaque communication dans laquelle le terminal est impliqué, le terminal indique:
- l'identifiant de la communication,
- pour chaque flux média de la communication dans laquelle le terminal est impliqué, les caractéristiques de ce flux et un identifiant de ce flux,
- l'identité de l'utilisateur distant avec lequel la communication est établie. Si cette identité est indisponible ou anonyme, le terminal indique "identité anonyme" ou identité indisponible selon le cas,
- s'il a le contrôle de cette communication ou non.

Dans une variante, cette information n'est fournie que par les terminaux ayant le contrôle d'une communication. Dans ce cas, pour chaque communication dont il a le contrôle, le terminal indique:
- l'identifiant de la session,
- pour chaque flux média de la session, les caractéristiques de ce flux, un identifiant de ce flux et l'identité du terminal qui porte ce flux,
- l'identité de l'utilisateur distant avec lequel la session est établie. Si cette identité est indisponible ou anonyme, le terminal indique "identité anonyme" ou identité indisponible selon le cas,

On notera que la fourniture des informations relatives aux sessions en cours est optionnelle et n'est pas indispensable à l'invention. Il est également possible de ne fournir qu'une partie des informations mentionnées ci-dessus.

Selon l'invention, deux cas sont donc possibles :
- Le terminal, qui souhaite indiquer son souhait d'être la cible d'un transfert dispose des informations fournies par les autres terminaux via le mécanisme de notification d'événements (informations décrites en 1.). Dans ce cas, le terminal utilise ces informations reçues pour désigner la session ou un ou plusieurs flux média qu'il souhaite se voir transférer. L'information de son état comporte alors les informations suivantes :
   o Un indicateur signifiant qu'il veut être la cible d'un transfert
   o L' (les) identifiant(s) de(s) session(s) concernée(s) par le transfert
   o Pour chaque session concernée par le transfert, Zéro, un ou plusieurs identifiants de flux media, correspondant au(x) flux media qu'il veut se voir transférer
   o Pour chaque session concernée par le transfert, indication si le transfert du contrôle de cette session est demandé ou non.
- Le terminal ne dispose d'aucune information concernant les sessions et flux médias en cours. Dans ce cas, le terminal indique simplement son souhait d'être la cible d'un transfert. Son information d'état comporte alors les informations suivantes :
   o Un indicateur signifiant qu'il veut être la cible d'un transfert
   o Zéro, un ou plusieurs types de media que le terminal veut se voir transférer
   o Un indicateur indiquant s'il veut se voir transférer le contrôle d'une session

Le mécanisme de notification d'événement permet au terminal contrôleur de la session concernée d'en être immédiatement notifié, et en combinant cette information avec les préférences de l'utilisateur (configurées dans le terminal) et d'autres paramètres éventuels, ce dernier décide d'initier le transfert.

Différentes solutions sont possibles pour échanger les informations relatives à l'état d'un utilisateur ou d'un de ses terminaux en utilisant le mécanisme de souscription/notification. Elles seront présentées de façon plus en détaillée dans la suite de la description.

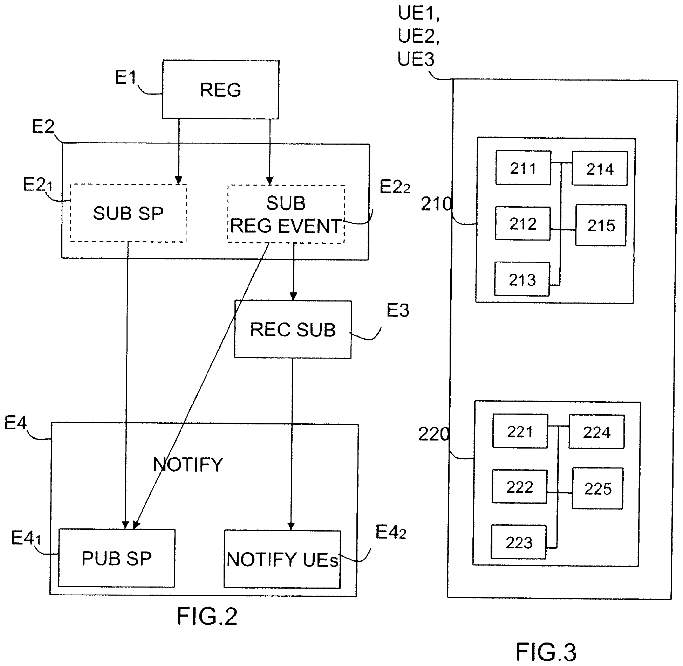

L'invention concerne donc un procédé d'implication dans au moins une session applicative en cours, qui va maintenant être décrit en relation avec la **figure 2****.** Un tel procédé est avantageusement mis en œuvre par un terminal de l'utilisateur A qui n'est impliqué dans aucune session applicative en cours. Il s'agit par exemple du terminal UE2. En E1, le terminal UE₂ s'enregistre dans l'IMS à l'aide d'un message SIP Register, tel que défini dans la RFC 3261 de l'IETF. En une étape E₂, il peut souscrire de façon optionnelle à un mécanisme de notification d'événement relatif à un état de l'utilisateur A.

En E₄, le terminal UE₂ émet une notification d'événement relatif à l'état de présence de l'utilisateur A comprenant une information indicatrice d'un souhait d'être la cible du transfert d'au moins un type de flux média d'une session applicative en cours. Cette notification est adressée aux terminaux de l'utilisateur qui y ont préalablement souscrit. A cet égard, il est nécessaire que le terminal UE₁ contrôleur de la session en cours ait rempli cette condition.

Selon un premier mode de réalisation de l'invention, ce mécanisme de souscription/notification est mis en œuvre par l'intermédiaire d'un serveur de présence SP 120 du système applicatif 10 du réseau de télécommunications 1. Un tel serveur est représenté sur la **figure 1****.** L'étape E2₁ consiste alors pour le terminal UE₂ à souscrire au mécanisme de notification de l'état de présence de l'identité publique associée à l'utilisateur A mis en œuvre par le serveur de présence SP selon l'invention. Si plusieurs identités publiques de cet utilisateur sont enregistrées pour un terminal d'utilisateur UE, l'identité par défaut de cet utilisateur doit être utilisée, comme précisé dans la TS 24.229. Les procédures de cette souscription sont décrites dans la RFC 3856.

En E4₁, le terminal UE₂ publie l'information ICT indicatrice d'un niveau d'implication souhaité dans une session applicative en cours auprès du serveur de présence SP 120, qui va la notifier aux terminaux qui ont souscrit à l'état de présence du terminal UE₂.

Selon une variante du premier mode de réalisation de l'invention, le terminal UE₂ souscrit en E2₁ à l'état d'enregistrement de l'identité publique de l'utilisateur A auprès d'une entité 100 de type S-CSCF (Serving-Call Session Control Function, en anglais) selon le mécanisme du package reg event décrit dans la RFC 3680 et dans le document draft-ietf-sipping-gruu-reg-event. Ce mécanisme lui permet d'obtenir les identités URI GRUU des autres terminaux enregistrés de l'utilisateur associés à une identité publique de l'utilisateur A. Selon cette variante, l'étape E2₁ consiste pour la terminal UE₂ à souscrire à l'état de présence des autres terminaux de l'utilisateur A, en précisant leurs identités URI GRUU qu'il a préalablement obtenues.

En E4₁, le terminal UE₂ publie l'information ICT auprès du serveur de présence SP 120, qui va la notifier aux terminaux qui ont souscrit à l'état de présence de l'utilisateur A sur le terminal UE₂.

Selon un deuxième mode de réalisation de l'invention, l'étape E2₂ de souscription au mécanisme de notification reg event est mise en œuvre suite à l'étape d'enregistrement E₁. Ce mécanisme permet au terminal UE₂ de l'utilisateur A d'obtenir les identités URI GRUU des autres terminaux enregistrés dans le réseau et associés à une identité publique de l'utilisateur A.. Dans une étape E₃, le terminal UE₃ reçoit et traite des demandes de souscription à la notification d'événements relatifs à son état en provenance d'autres terminaux UE₁, UE₂ de l'utilisateur A. Les autres terminaux UE₁ et UE₃ de l'utilisateur A utilisent l'URI GRUU du terminal UE₂ pour lui adresser leur demande de souscription. En E4₂, le terminal UE₂ émet directement une notification comprenant l'information ICT aux terminaux qui ont souscrit aux événements relatifs à son état de présence dans l'étape précédente.

On notera que dans ce deuxième mode de réalisation, l'invention prévoit la définition d'un nouveau type d'événement destiné à être notifié par l'intermédiaire du mécanisme SUBSCRIBE/NOTIFY. Ce nouveau type d'évènement, que l'on pourrait appeler "UE status", concerne au moins l'information ICT indicatrice d'un niveau d'implication souhaité par le terminal UE3 dans une session applicative en cours. Une telle information peut par exemple prendre la forme d'un indicateur à deux valeurs, pour indiquer si le terminal veut ou non être la cible d'un transfert. Elle peut être avantageusement complétée par l'indication d'un nombre de types de flux média souhaité. Elle peut aussi comprendre une indication d'un souhait de prendre le contrôle de la session en cours.

Selon un mode de réalisation de l'invention, le procédé de demande de transfert d'au moins un type de flux média est mis en œuvre dans un dispositif 210 d'implication dans une session en cours, qui va être maintenant décrit en relation avec la **figure 3**. Il comprend les éléments matériels que l'on retrouve classiquement dans un ordinateur conventionnel ou un routeur spécialisé, à savoir un processeur 211, une mémoire vive de type RAM 212, une mémoire morte de type ROM 213 et des moyens 214 de télécommunications avec le réseau 1.

Conformément à l'invention, le dispositif 210 comporte une mémoire 215 qui constitue un support d'enregistrement conforme à l'invention. Ce support mémorise le programme d'ordinateur conforme à l'invention. Ce programme comporte des instructions pour l'exécution des étapes du procédé de demande de transfert conforme à l'invention qui vient d'être décrit en référence à la **figure 2****.**

De façon avantageuse le dispositif d'implication dans une session en cours selon l'invention est mis en œuvre dans un terminal d'utilisateur UE3, UE2, UE1.

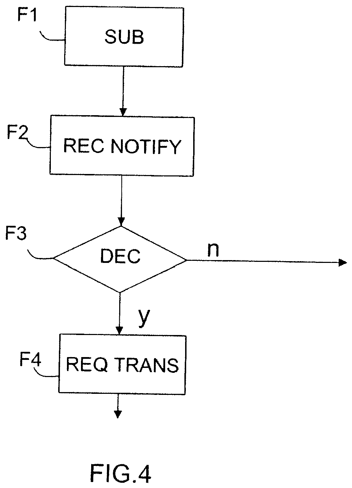

Une fois l'information ICT indicatrice d'un souhait d'implication dans une session en cours notifiée dans le réseau par le terminal requérant UE3, elle est traitée selon l'invention par le procédé de traitement d'une information indicatrice d'un souhait d'implication dans une session en cours qui va maintenant être décrit en relation avec la **figure 4****.** Un tel procédé est avantageusement mis en œuvre par le terminal contrôleur UE₁.

On suppose que le terminal UE₁ a souscrit en F₁ à un mécanisme de notification d'événement tel que ceux précédemment décrits. En F₂, il reçoit une notification d'évènement. Elle est relative à un état de l'utilisateur A sur le terminal UE₂ et comporte l'information ICT indicatrice d'un souhait du terminal UE₂ d'être la cible d'un transfert de flux média. Elle peut provenir du serveur de présence SP 120 ou directement du terminal requérant, selon le mécanisme de notification utilisé. En F₃, le terminal UE₁ décide si une telle demande de transfert doit être acceptée. Selon l'invention, plusieurs critères de décision peuvent être considérés, parmi lesquels, de façon non limitative :
- l'existence d'un flux du type demandé; en effet, il se peut que plusieurs personnes, par exemple les membres d'une même famille, utilisent l'identité publique d'un même abonné et que l'utilisateur du terminal UE₃ n'ait pas connaissance des sessions en cours sur les autres terminaux associés à cette identité publique;
- la configuration du terminal contrôleur UE₁. Il peut être configuré pour accepter ou refuser toutes les demandes de transfert;
- le type de média ou type de session. Par exemple, le terminal contrôleur pourrait refuser le transfert de flux média attachés à une session particulière, par exemple professionnelle, pour des raisons de confidentialité;
- le type de terminal requérant. Le terminal contrôleur pourrait accepter partiellement d'impliquer le terminal requérant, en ne lui accordant le transfert de flux média que pour un type de flux prédéterminé, par exemple un flux vidéo pour un terminal téléviseur.

Une fois la décision prise, si elle est positive, le terminal contrôleur émet en F₄ une commande d'implication au réseau 1, pour le terminal requérant UE₂. A titre d'exemple, il peut s'agir d'une demande de transfert de flux média de la session en cours vers le terminal UE₂. De façon avantageuse, dans l'IMS, c'est le serveur d'application SCC-AS 110 en charge de la gestion de la mobilité des utilisateurs qui traite une telle requête, tel que spécifié dans le document TR 23.838.

Selon un mode de réalisation de l'invention, le procédé de traitement d'un souhait d'implication dans une session applicative est mis en œuvre dans un dispositif 220 de traitement d'une information indicatrice d'un souhait d'implication, qui va être maintenant décrit en relation avec la **figure 3**. Il comprend les éléments matériels que l'on retrouve classiquement dans un ordinateur conventionnel ou un routeur spécialisé, à savoir un processeur 221, une mémoire vive de type RAM 222, une mémoire morte de type ROM 223 et des moyens 224 de télécommunications avec le réseau 1.

Conformément à l'invention, le dispositif 220 comporte une mémoire 225 qui constitue un support d'enregistrement conforme à l'invention. Ce support mémorise le programme d'ordinateur conforme à l'invention. Ce programme comporte des instructions pour l'exécution des étapes du procédé de traitement d'une demande de transfert conforme à l'invention qui vient d'être décrit en référence à la **figure 4****.**

De façon avantageuse le dispositif de traitement 'une information indicatrice d'un souhait d'implication dans une session applicative selon l'invention est mis en œuvre dans un terminal d'utilisateur UE₃, UE₂, UE₁.

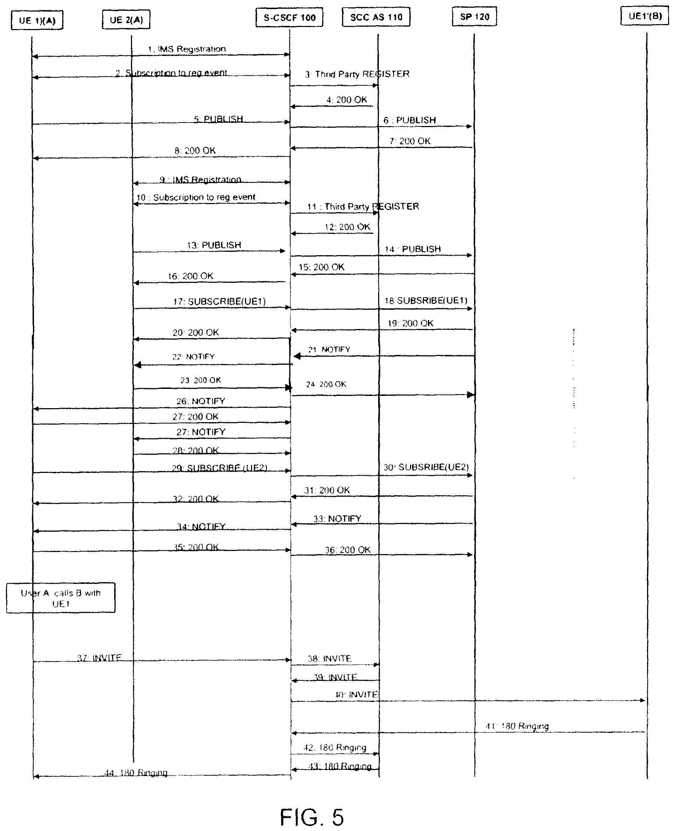

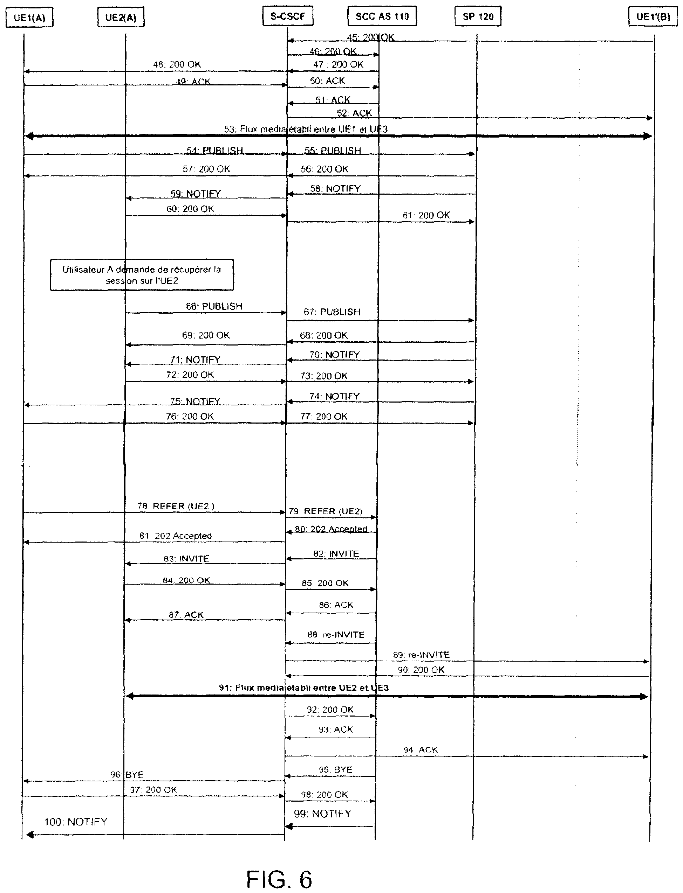

A titre d'exemple de mise en œuvre dans une architecture IMS, les messages de signalisation échangés entre les terminaux UE₁, UE₂ de l'utilisateur A, le terminal UE₁' de l'utilisateur B et le réseau de télécommunication 1 selon le premier mode de réalisation de l'invention vont maintenant être décrits plus en détails en relation avec les diagrammes de flux des **figures 5** **et** **6****.**

L'utilisateur A dispose des terminaux UE₁, UE₂ et UE₃.

Pour rappel, l'utilisateur A utilise son terminal UE₁ pour appeler un utilisateur B qui dispose du terminal UE₁'. Une session média est donc établie entre les terminaux UE₁(A) et UE₁'(B).

L'utilisateur A décide de demander le transfert de la communication sur son terminal UE₂ en agissant sur ce dernier.

On notera que tous les messages SIP échangés émis ou reçus par les terminaux UE₁ et UE₂ de l'utilisateur A passent par une entité P-CSCF (Proxy-Call Session Control Function, en anglais). Il en est de même pour le terminal UE₁' de l'utilisateur B. Par souci de simplification, ces entités P-CSCF ne sont pas représentées.

On notera que d'autres entités SIP que celles représentées peuvent se trouver sur le chemin de signalisation entre le terminal UE₁'(B) et l'entité S-CSCF. Celles-ci ne sont pas représentées sur les **figures 5** et **6****.**

### Enregistrement du terminal UE₁(A) dans le réseau 1:

- Message 1 : le terminal UE₁ s'enregistre avec succès auprès de l'entité S-CSCF (réseau IMS). Le S-CSCF 100, dans la réponse 200 OK au message REGISTER, renvoie l'identité URI de type GRUU qu'il a associée à ce terminal. Le mécanisme d'attribution de cette URI est défini dans le document TS 24.229;
- Message 2: le terminal UE₁ souscrit à l'état d'enregistrement de l'utilisateur (reg event package) tel que spécifié dans le document TS 24.229. Cette souscription permet au terminal UE₁ d'être informé des autres terminaux UE enregistrés dans le réseau 1 et associés avec la même identité publique et d'obtenir ainsi leurs identités GRUU URI. On suppose que le terminal UE₁ est pour l'instant le seul terminal enregistré associé à l'identité publique de l'utilisateur A.
- Messages 3 et 4: L'entité S-CSCF 100 informe le serveur d'application 110 SCC AS de l'enregistrement du terminal UE₁ en lui envoyant les informations relatives à cet enregistrement. Cette procédure est décrite dans le document TS 24.229.
- Messages 5, 6, 7 et 8: le terminal UE₁ publie les informations de présence le concernant au serveur de présence SP 120. Parmi ces informations, le terminal UE1 indique qu'il est disponible et donne les types des médias supportés.

### Enregistrement du terminal UE2 dans le réseau:

- Message 9 : le terminal UE₂ s'enregistre avec succès auprès de l'entité S-CSCF 100 de l'architecture IMS. L'entité S-CSCF 100, dans la réponse 200 OK au message REGISTER, renvoie l'identité URI de type GRUU qu'elle a associée à ce terminal.
- Message 10: le terminal UE₂ souscrit à l'état d'enregistrement de l'utilisateur (reg event package) tel que spécifié dans [TS 24.229]. Cette souscription permet au terminal UE2 d'être informé des autres terminaux UEs enregistrés dans le réseau 1 et associés à la ou les mêmes identités publiques d'utilisateur et d'obtenir leurs identités GRUU URI. Le terminal UE₂ obtient ainsi l'information selon laquelle le terminal UE1 est enregistré dans le réseau 1, ainsi que son identité URI GRUU.
- Messages 11 et 12: L'entité S-CSCF 100 informe le serveur d'application SCC AS 110 de l'enregistrement du terminal UE₂ en lui envoyant les informations relatives à cet enregistrement. Cette procédure est décrite dans le document TS 24.229.
- Messages 13, 14, 15 et 16: le terminal UE₂ publie les informations de présence le concernant au serveur de présence SP 120. Il indique notamment qu'il est disponible et donne les types des médias qu'il supporte.

### Souscription aux informations de présence des autres terminaux:

- Messages 17, 18, 19 et 20: L'UE₂ souscrit aux informations de présence concernant l'utilisateur A. Selon une variante, il peut souscrire aux informations de présence de l'utilisateur A sur le terminal particulier UE₁, en précisant l'identifiant URI GRUU de UE₁.
- Messages 21, 22, 23 et 24: le serveur de présence SP 120 notifie au terminal UE₂ l'état courant des informations de présence concernant le terminal UE₁. Le terminal UE2 apprend que l'UE1 est disponible et prend connaissance de ses types de média supportés.
- Messages 26, 27, 28 et 28: le S-CSCF 100 notifie les terminaux UE₁ et UE₂ du changement des informations d'enregistrement de l'utilisateur A suite à l'enregistrement de l'UE₂. Le terminal UE₁ est donc informé que l'UE₂ est maintenant enregistré et connaît son URI GRUU.
- Messages 29, 30, 31, 31 et 32: Le terminal UE₁ souscrit auprès du serveur de présence SP 120 aux informations de présence concernant l'utilisateur A sur l'UE₂, identifié par l'URI GRUU de l'UE₁
- Messages 33, 34, 35 et 36: le serveur de présence SP 120 notifie à l'UE₁ l'état courant des informations de présence concernant l'UE₂. Le terminal UE₁ apprend que le terminal UE₂ est disponible et prend connaissance de ses types de média supportés.

### L'utilisateur A, en utilisant son terminal UE, établit un appel avec l'utilisateur B utilisant l'UE₃:

- Messages 37, 38, 39 et 40: L'utilisateur A, via son terminal UE₁, émet un appel à destination de l'utilisateur B en envoyant une requête INVITE.
- Messages 41, 42, 43 et 44: Le terminal UE₁'(B) informe l'UE₁(A) que l'utilisateur B a été alerté de l'arrivée de l'appel, en envoyant une réponse SIP 180 Ringing.
- Messages 45, 46, 47 et 48: Le terminal UE₁'(B) informe l'UE₁ que l'utilisateur B a accepté l'appel, en envoyant une réponse 200 OK.
- Messages 49, 50, 51 et 52: Le terminal UE₁(A) acquitte la réception de la réponse 200 OK en envoyant un message ACK.
- Message 53: la session est établie entre l'utilisateur A et B via leur terminaux respectifs UE₁ et UE₁'.
- Messages 54, 55, 56 et 57: Le terminal UE₁ informe le server de présence SP 120 qu'il est maintenant impliqué dans une session, en précisant:
   o l'identifiant de cette session. Cette identifiant est généré par le terminal UE1 et doit permettre de distinguer cette session des autres sessions dans lesquelles le terminal UE1 pourrait être impliqué. Dans cet exemple, on suppose que le terminal UE1 attribue la valeur 1 à cette session;
   o l'identité publique de l'utilisateur distant: identité de B et les types de médias utilisés dans cette session.
- Messages 58, 59, 60, 61: suite au changement des informations de présence de l'UE1 dû à son implication dans une session, le serveur de présence SP 120 notifie l'UE₂ de ce changement. Le terminal UE₂ apprend que le terminal UE₁ est impliqué dans une session avec les caractéristiques de cette session.

### L'utilisateur A, via son terminal UE₂, demande le transfert de la communication entière et de son contrôle sur le terminal UE₂:

- Messages 66, 67, 68, 69: suite à la demande de l'utilisateur A de transférer la communication entière avec son contrôle sur le terminal UE₂, ce dernier met à jour son information de présence auprès du serveur de présence pour indiquer qu'il souhaite qu'on lui transfère la session numéro 1 de l'UE₁. Dans une variante, l'UE₂ indique uniquement qu'il souhaite être la cible de transfert d'une session en précisant son type éventuellement.
- Messages 70, 71, 72, 73, 74, 75, 76 et 77: suite au changement des informations de présence concernant l'UE₂, le serveur de présence SP 120 notifie les terminaux de l'utilisateur A ayant souscrit à la notification d'évènement, de ce changement. En particulier, le terminal UE₁ apprend que l'UE₂ souhaite récupérer la session numéro 1 dans laquelle UE₁ est impliqué.

### Transfert de la session de UE₁ à UE₂

- Messages 78, 79: le terminal UE₁, sur réception de l'information indiquant que le terminal UE₂ souhaite récupérer sa session n°1, décide de transférer cette session à l'UE₂ en envoyant une requête REFER au SCC AS 110 lui demandant de transférer la session à l'UE₂. Dans une telle requête, le terminal UE₂ est identifié par son URI GRUU.
- Messages 80 et 81: le SCC AS 110 accepte la requête REFER.
- Messages 82, 83: le SCC AS 110 envoie une requête INVITE à destination de l'URI GRUU du terminal UE₂.
- Messages 84, 85: Le terminal UE₂ accepte l'établissement de cette session en envoyant un message 200 OK.
- Messages 86, 87: Le SCC AS 110 acquitte la réponse 200 OK.
- Messages 88, 89: Le SCC AS 110 envoie une requête dite "re-INVITE" (requête INVITE dans un dialogue SIP déjà établi) au terminal UE₁'(B) afin de mettre à jour sa session avec les paramètres SDP reçus du terminal UE₂ dans le message 85.
- Messages 90, 92: Le terminal UE₁' accepte la requête re-INVITE.
- Message 91: les flux médias sont établis entre le terminal UE₂(A) et le terminal UE1'(B).
- Messages 93, 94: Le SCC AS 110 acquitte la réponse 200 OK.
- Messages 95, 96, 97, 98: Le SCC AS 110 libère sa sessions avec l'UE₁.
- Messages 99, 100: Comme spécifié dans le RFC 3515, le SCC AS 110 informe le terminal UE1(A) du succès du transfert de la session.

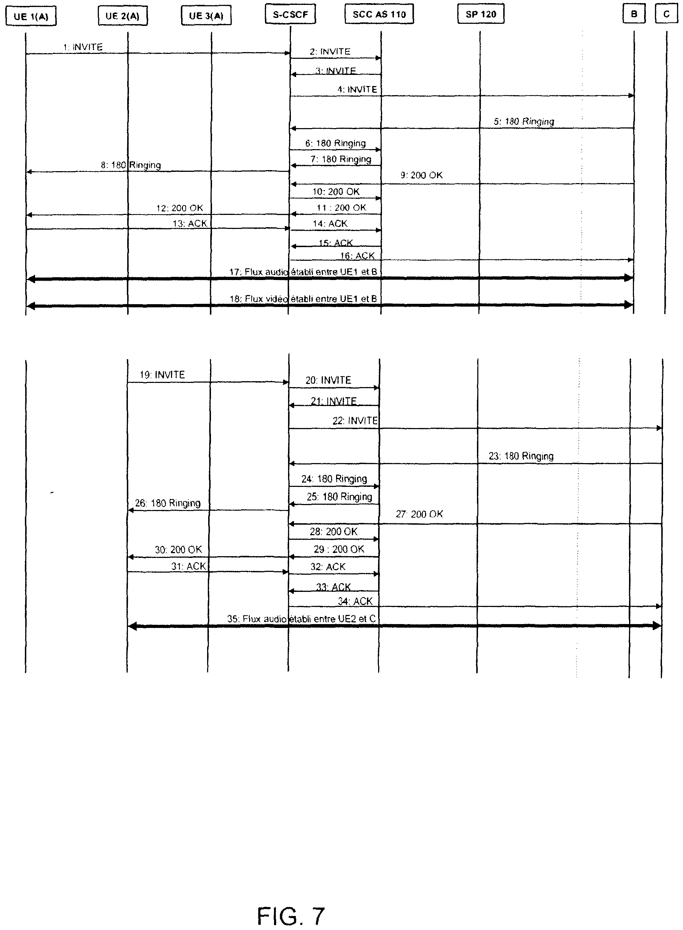

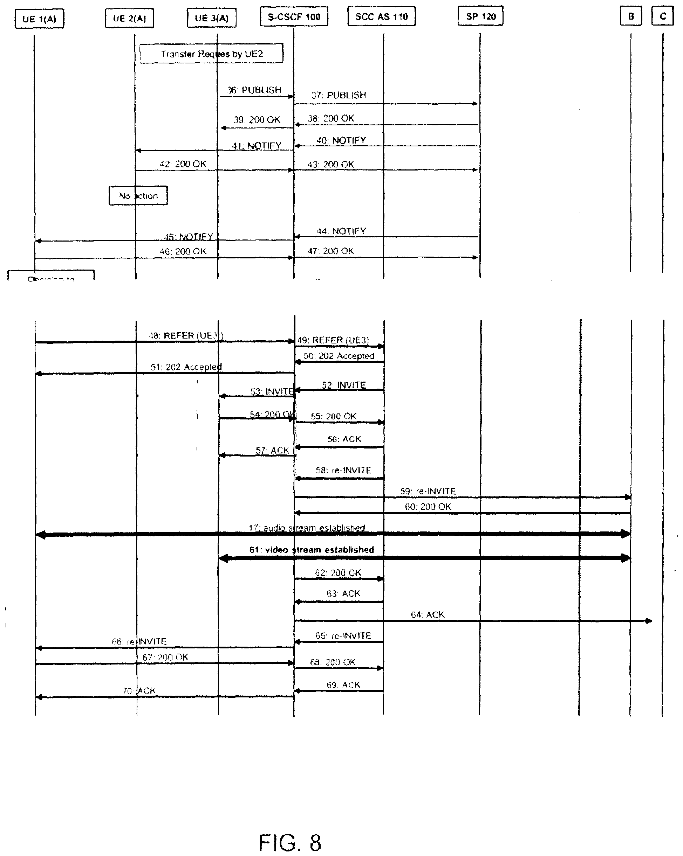

En relation avec les **figures 7** **et** **8**, on présente maintenant un autre exemple de mise en œuvre du premier mode de réalisation de l'invention :
L'utilisateur A dispose de trois terminaux UE₁, UE₂ et UE_{3.}
L'utilisateur A, avec son terminal UE₁, est en communication avec un autre utilisateur (ou un service) B. Cette communication utilise deux médias : audio et vidéo.
L'utilisateur A, avec son terminal UE₂, est en communication avec un autre utilisateur (ou un service) C. Cette communication utilise un seul média : audio.
L'utilisateur A transfère le flux vidéo de son terminal UE₁ vers UE₃ en agissant sur ce dernier. Le terminal UE₁ garde le contrôle de la communication et le flux audio.

### Enregistrement des terminaux UE au réseau:

Chacun des terminaux UE₁, UE₂ et UE₃ s'enregistre au réseau, souscrit à l'état d'enregistrement de l'utilisateur (reg event package) et envoie les informations de présence le concernant au serveur de présence, de même que décrit dans l'exemple précédent.

### Souscription aux informations de présence des autres terminaux:

Chacun des terminaux UE₁, UE₂ et UE₃ souscrit aux informations de présence des 2 autres terminaux, identifiés chacun par leurs identifiants URI GRUU obtenus par la souscription à l'état d'enregistrement de l'utilisateur, de même que décrit dans l'exemple précédent.
- Messages 1, 2, 3 et 4: L'utilisateur A, via son terminal UE₁, envoie une requête INVITE à destination de B, pour une session avec 2 flux média, un flux audio et un flux vidéo.
- Messages 5 à 16 : L'établissement de la session SIP se poursuit de façon standard.
- Messages 17, 18 : la communication est établie entre l'utilisateur A (via son terminal UE₁) et B avec un flux audio et un flux vidéo. On suppose ici que l'UE1 ne fournit pas les caractéristiques de la session établie aux autres terminaux de A.
- Messages 36, 37, 38, 39: suite à la demande de l'utilisateur A, UE₃ met à jour son information de présence auprès du serveur de présence en incluant :
   ∘ un indicateur signifiant qu'il veut être la cible d'un transfert;
   ∘ les types de média que le terminal veut se voir transférer, par exemple "vidéo" uniquement;
   ∘ un indicateur indiquant qu'il ne veut pas se voir transférer le contrôle d'une communication.
- Messages 40, 41, 42, 43, 44, 45, 46 et 47: suite au changement des informations de présence concernant le terminal UE₃, le serveur de présence SP 120 notifie les terminaux UE₁ et UE₂ de ce changement, car ils ont préalablement souscrit à la notification de présence du terminal UE₃. Les terminaux UE₁ et UE₂ apprennent alors que le terminal UE₃ souhaite se faire transférer un flux vidéo sans contrôle de communication. Cela n'engendre aucune action pour le terminal UE₂, car il ne contrôle aucune communication comportant un flux vidéo. Par contre, le terminal UE1 contrôle une communication comportant un flux vidéo. En prenant en compte la nouvelle information de présence du terminal UE₃, et en la combinant avec d'autres critères de décisions tels que, par exemple, des préférences de l'utilisateur (configurées dans le terminal UE1) et d'autres paramètres éventuels, le terminal UE₁ décide d'initier le transfert du flux vidéo, tout en gardant le contrôle de la communication.
- Messages 48, 49: Le terminal UE₁ envoie une requête REFER au SCC AS 110 lui demandant de transférer le flux vidéo de sa communication au terminal UE₃, UE₃ étant identifié par son URI GRUU. L'indication qu'il s'agit uniquement du transfert du flux vidéo peut être, par exemple, accomplie en ajoutant un paramètre à l'URI GRUU de l'UE₃ se trouvant dans l'entête Refer-To.
- Messages 50 et 51: le SCC AS 110 accepte la requête REFER.
- Messages 52, 53: le SCC AS 110 envoie une requête INVITE à destination de l'URI GRUU du terminal UE₃.
- Messages 54, 55: le terminal UE₃ accepte l'établissement de cette session en envoyant un message 200 OK.
- Messages 56, 57: Le SCC AS 110 acquitte la réponse 200 OK.
- Messages 58, 59: Le SCC AS 110 envoie une requête dite "re-INVITE" (requête INVITE dans un dialogue SIP déjà établi) à B afin de mettre à jour la session de l'utilisateur B avec les paramètres SDP reçus de UE₃ dans le message 55.
- Messages 60, 62: B accepte la requête re-INVITE.
- 61: le flux vidéo est établi entre le terminal UE₃(A) et B. Le flux audio 17 est conservé entre le terminal UE1(A) et B.
- Messages 63, 64: Le SCC AS 110 acquitte la réponse 200 OK.
- Messages 65, 66: Le SCC AS 110 envoie une requête dite "re-INVITE" à UE₁ afin de mettre à jour la session de UE₁ pour supprimer le flux vidéo (le flux audio et le contrôle de la communication sont conservés).
- Messages 67, 68: le terminal UE₃ accepte cette modification de session en envoyant un message 200 OK.
- Messages 69, 70: Le SCC AS 110 acquitte la réponse 200 OK.

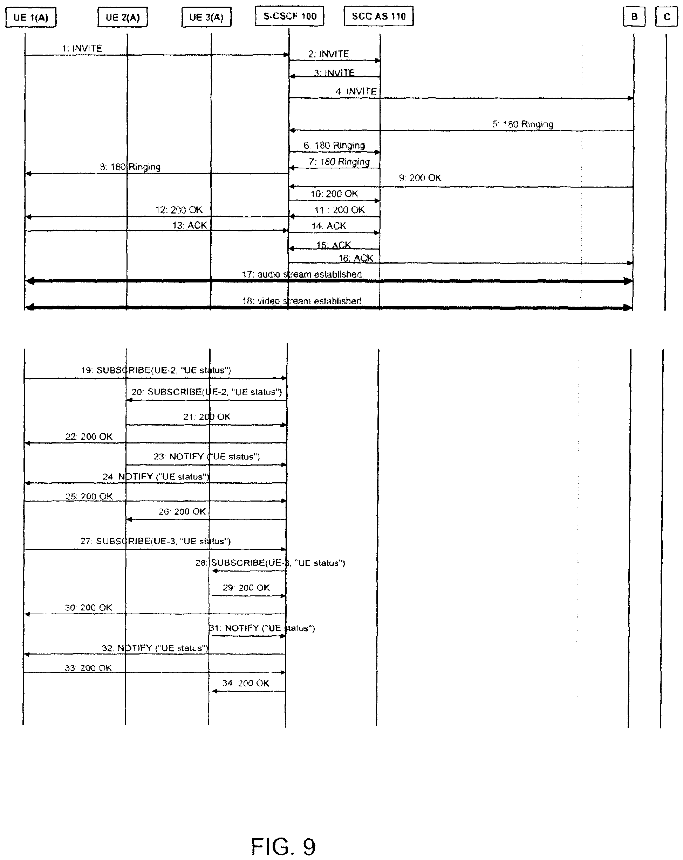

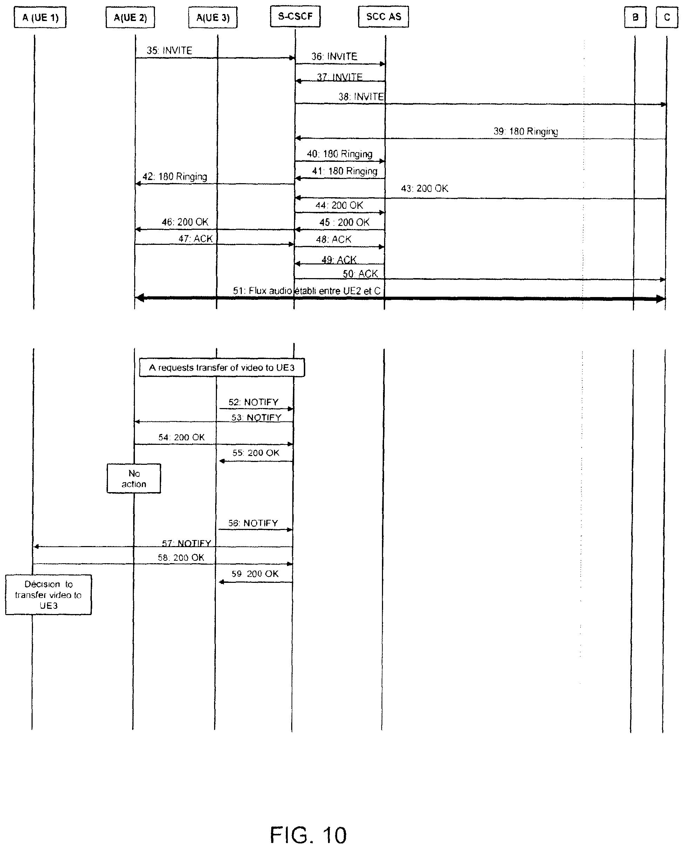

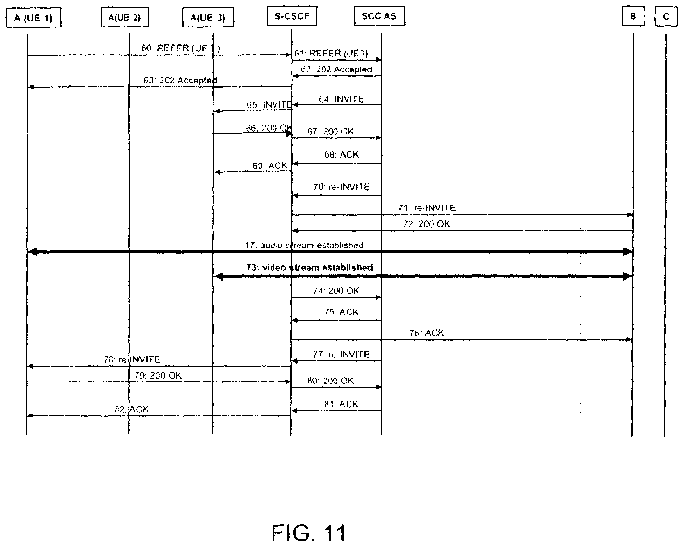

En relation avec les **figures 9****,** **10** **et** **11**, on présente maintenant un exemple de mise en œuvre du deuxième mode de réalisation de l'invention. Pour rappel, dans ce deuxième mode, les terminaux de l'utilisateur ne souscrivent pas à la notification d'un état de présence de l'utilisateur auprès du serveur de présence SP 120, mais à un autre mécanisme de notification d'événement, auprès de chacun des terminaux de l'utilisateur.. On considère le même cas d'application que dans l'exemple qui vient d'être présenté en relation avec les **figures 7** et **8** :
- L'utilisateur A dispose de trois terminaux UE₁, UE₂ et UE₃;
- L'utilisateur A, avec son terminal UE₁, est en communication avec un autre utilisateur (ou un service) B. Cette communication utilise deux média : audio et vidéo;
- L'utilisateur A, avec son terminal UE₂, est en communication avec un autre utilisateur (ou un service) C. Cette communication utilise un seul média : audio;
- L'utilisateur A transfère le flux vidéo de l'UE₁ vers UE₃ en agissant sur ce dernier. UE₁ garde le contrôle de la communication et le flux audio.

### Enregistrement des UE au réseau:

Chacun des terminaux UE₁, UE₂ et UE₃ s'enregistre au réseau, souscrit à l'état d'enregistrement de l'utilisateur (reg event package) comme décrit précédemment. En revanche, les terminaux UE₁, UE₂ et UE₃ de A ne souscrivent pas à l'état de présence de l'utilisateur auprès du serveur de présence SP 120. En effet, dans cette solution, le mécanisme de présence n'est pas utilisé.
Messages 1, 2, 3 et 4 : L'utilisateur A, via son terminal UE₁, envoie une requête INVITE à destination de B, pour une session avec deux flux média : audio et vidéo.
Messages 5 à 16 : L'établissement de la session SIP se poursuit de façon standard. 17, 18 : la communication est établie entre l'utilisateur A (via son terminal UE₁) et B avec un flux audio et un flux vidéo.
NB: On suppose ici que l'UE₁ ne fournit pas les caractéristiques de la session établie aux autres terminaux de A.

### Souscription de UE-1 au "UE-status event package" des autres terminaux:

Le terminal UE₁ souscrit aux informations sur l'état des deux autres terminaux UE₂ et UE₃ de l'utilisateur A, identifiés par leurs URI GRUU qu'il a obtenu par la souscription à l'état d'enregistrement de l'utilisateur, comme décrit ci-dessous :
- Messages 19 à 22 : Le terminal UE₁ souscrit à un nouveau type d'événement selon l'invention, appelé "UE status", auprès du terminal UE₂ lui-même, identifié par son URI GRUU. Un exemple de message SUBSCRIBE envoyé par le terminal UE₁ au terminal UE₂ est présenté ci-dessous. Dans cet exemple, le terminal UE₁ possède l'identité URI GRUU "*sip:userA_public1@home1.net;**gr***=*urn:uuid:f82f4fa1-72fc-1131-e2f2-10eec91e6ffff: UE₁"* et le terminal UE₂ l'identité URI GRUU *"sip:userA_public_1@home1.net;**gr***=*urn:uuidf81d4fae-7dec-11d0-a765-00a0c91e6bf6".* 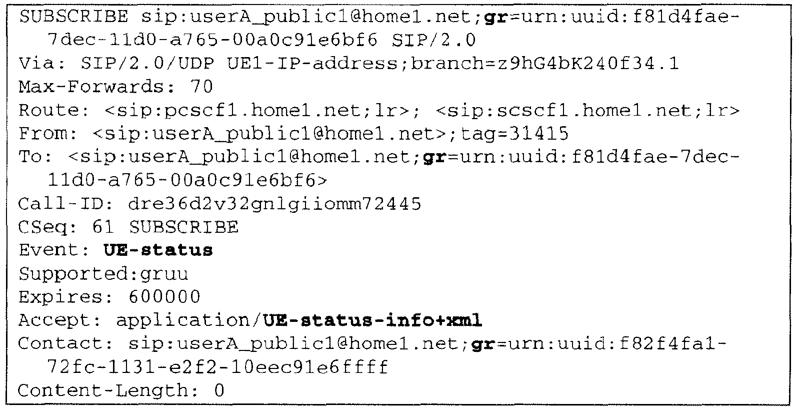
   On notera qu'il n'est pas nécessaire pour un terminal qui n'a aucune session en cours de souscrire à l' "UE-status" event package.
- Messages 23 à 26 : le terminal UE₂ notifie au terminal UE₁ son état courant des informations du "UE status event package". Ces informations n'indiquent pas que le terminal UE₂ veut être la cible d'un transfert de flux média. Ci-dessous un exemple du message NOTIFY envoyé par l'UE₂ à l'UE₁: 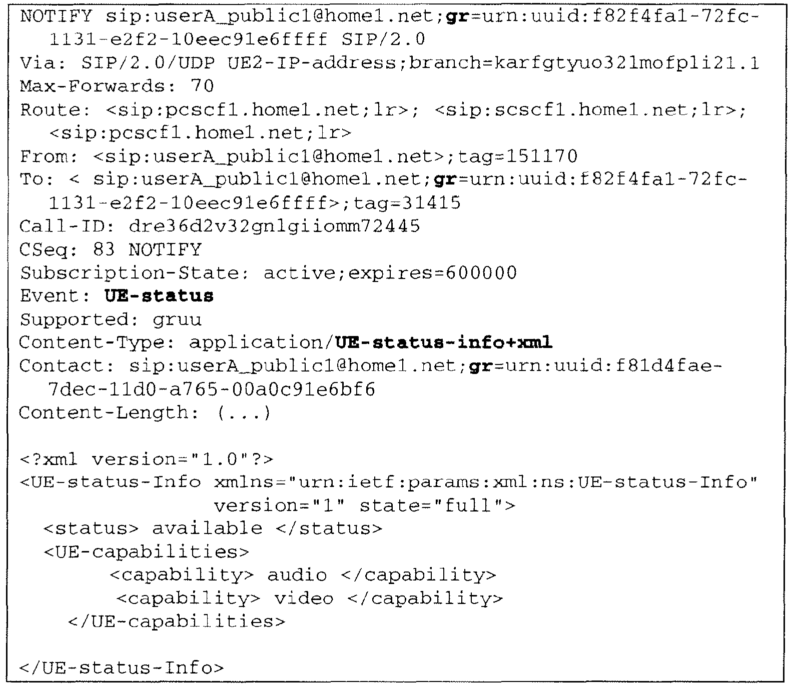
- Messages 27 à 30 : le terminal UE₁ souscrit à l'évènement "UE status event package" du terminal UE₃, auprès du terminal UE₃ lui-même, identifié par l'URI GRUU de l'UE₃.
- Messages 31 à 34 : le terminal UE₃ notifie au terminal UE₁ son état courant des informations du "UE status event package". Ces informations n'indiquent pas que UE₃ veut être la cible d'un transfert.

### Etablissement d'une communication entre UE2 et C

Une nouvelle communication, entre le terminal UE₂ de l'utilisateur A et l'utilisateur ou service C, avec un seul média (audio), est établie avec les mêmes échanges que dans l'exemple précédent, décrit en relation avec les **figures 8** et **9****.**

### Souscription du terminal UE₂ au "UE-status event package" des autres terminaux:

Cette procédure est similaire à celle décrite précédemment.

### L'utilisateur A, via son terminal UE₃, demande le transfert du flux vidéo de UE₁ vers UE3

Dans le cas considéré, le terminal UE₃ n'a pas d'information sur les sessions en cours.

Il met à jour ses informations "UE status" (qui sont stockées dans le terminal UE3 lui-même) en incluant :
- Un indicateur signifiant qu'il veut être la cible d'un transfert;
- Les types de média que le terminal veut se voir transférer, à savoir "vidéo" uniquement;
- Un indicateur indiquant qu'il ne veut pas se voir transférer le contrôle d'une session.

En variante, le terminal UE3 aurait pu souscrire au préalable à l'***UE-status event package" des autres terminaux*** UE₁ et UE₂ et avoir obtenu les identifiants et caractéristiques des sessions en cours sur les autres terminaux UE₁ et UE₂ de l'utilisateur A.

Suite à cette mise à jour, UE₃ doit notifier les terminaux qui ont souscrit auprès de lui, au "UE status event package" :
- Messages 52 à 55: le terminal UE₃ notifie les terminaux UE₂ et UE₁ du changement de ses informations "UE status", car les terminaux UE₂ et UE₁ ont préalablement souscrit au "UE status event package" de UE₃. UE₁ et UE₂ apprennent alors que le terminal UE₃ souhaite se faire transférer un flux vidéo sans contrôle de communication. Cela n'engendre aucune action pour le terminal UE₂, car UE₂ ne contrôle aucune communication comportant un flux vidéo. Par contre, UE₁ contrôle une communication comportant un flux vidéo. En prenant en compte la nouvelle information sur l'état du terminal UE₃, et en la combinant éventuellement avec d'autres critères de décision, UE₁ décide d'initier le transfert du flux vidéo, tout en gardant le contrôle de la communication. On présente ci-dessous un exemple d'information envoyé dans le corps des messages NOTIFY (messages 52 et 56):

| |
|---|
| ```
  <?xml version="1.0"?>
    <UE-status-Info xmlns="urn:ietf:params:xml:ns:UE-status-Info"
             version="1" state="full">
     <status> "transfer-desired" </status>
     <Desired-transfer> media="video" control="no" </Desired-
   transfer>
     <UE-capabilities>
         <capability> audio </capability>
           <capability> video </capability>
    </UE-capabilities>
   </UE-status-Info>
``` |

***Transfert du flux vidéo de UE₁ vers UE₃ :*** la même procédure que dans l'exemple décrit en relation avec la **figure 8** est mise en oeuvre.

## Revendications

1. Procédé de traitement d'une information indicatrice d'un souhait d'implication dans au moins une session applicative établie selon le protocole SIP, en cours pour un utilisateur (A) d'un réseau de télécommunications (1), ladite au moins une session comprenant des flux média échangés pendant la session applicative et étant contrôlée par un premier terminal (UE₁) dudit utilisateur, **caractérisé en ce que** ledit procédé, mis en œuvre par le premier terminal contrôleur, comprend les étapes suivantes :
- réception (F₂) par le premier terminal (UE₁) d'une notification d'événement relatif à l'état de l'utilisateur, comprenant au moins une information indicatrice d'un niveau d'implication dans ladite session applicative souhaité par le deuxième terminal (UE₂) dudit utilisateur, ledit événement étant détecté par le deuxième terminal (UE₂) et ladite notification comprenant ledit niveau d'implication dans ladite session applicative ; concernant au moins un type de flux média de ladite au moins session applicative en cours
- prise de décision (F₃) sur l'opportunité d'accorder au deuxième terminal ledit niveau d'implication dans ladite session applicative ; et
- en cas de décision favorable d'accepter ledit niveau d'implication dans ladite session applicative souhaité par le deuxième terminal, envoi (F₄) d'une commande d'implication relative audit niveau d'implication dans ladite session applicative souhaité par le deuxième terminal au réseau de télécommunications.

2. Procédé de traitement d'une information indicatrice d'un souhait d'implication dans une session applicative selon la revendication 1, **caractérisé en ce que** ladite information concerne un souhait d'être la cible d'un transfert d'au moins un type de flux média.

3. Procédé de traitement d'une information indicatrice d'un souhait d'implication dans une session applicative selon la revendication 1, **caractérisé en ce que** ladite information concerne un souhait de prendre le contrôle de ladite au moins une session applicative en cours.

4. Procédé de traitement d'une information indicatrice d'un souhait d'implication dans une session applicative selon la revendication 1, **caractérisé en ce que**, suite à la souscription préalable (F₁) à un mécanisme de notification d'événement relatif à un état de l'utilisateur par le premier terminal (UE₁) auprès d'un serveur de présence (SP 120) du réseau de télécommunications, la notification d'événement est reçue dudit serveur de présence.

5. Procédé de traitement d'une information indicatrice d'un souhait d'implication dans une session applicative selon la revendication 1, **caractérisé en ce que**, suite à la souscription (F₁) à un mécanisme de notification d'événement auprès du deuxième terminal, la notification d'événement est reçue du deuxième terminal.

6. Dispositif (220) de traitement d'une information indicatrice d'un souhait d'implication dans une session applicative établie selon le protocole SIP, en cours pour un utilisateur d'un réseau de télécommunications, ladite au moins une session comprenant des flux média échangés pendant la session applicative et étant contrôlée par un premier terminal dudit utilisateur, **caractérisé en ce que** ledit dispositif, apte à être mis en œuvre par le premier terminal contrôleur, comprend :
- moyens pour la réception par le premier terminal (UE₁) d'une notification d'événement relatif à l'état de l'utilisateur, comprenant au moins une information indicatrice d'un niveau d'implication dans ladite session applicative souhaité par un deuxième terminal dudit utilisateur, ledit événement étant détecté par le deuxième terminal (UE₂) et ladite notification comprenant ledit niveau d'implication dans ladite session applicative concernant au moins un type de flux média de ladite au moins session applicative en cours;
- moyens pour la prise de décision sur l'opportunité d'accorder au deuxième terminal ledit niveau d'implication dans ladite session applicative ; et
- moyens pour l'envoi, en cas de décision favorable d'accepter ledit niveau d'implication dans ladite session applicative souhaité par le deuxième terminal , d'une commande d'implication relative audit niveau d'implication dans ladite session applicative souhaité par le deuxième terminal au réseau de télécommunications.

7. Procédé d'implication dans au moins une session applicative établie selon le protocole SIP, en cours pour un utilisateur (A) d'un réseau de télécommunications (1), ladite session comprenant des flux média échangés pendant la session applicative et étant contrôlée par un premier terminal (UE₁) dudit utilisateur, **caractérisé en ce que** ledit procédé, mis en œuvre par un deuxième terminal (UE₂) dudit utilisateur, comprend une étape (E₄) d'émission d'une notification d'événement relatif à l'état de l'utilisateur comprenant au moins une information indicatrice d'un niveau d'implication dans ladite session applicative souhaité par le deuxième terminal, ledit événement étant détecté par le deuxième terminal (UE2) et ladite notification comprenant ledit niveau d'implication dans ladite session applicative concernant au moins un type de flux média de ladite au moins session applicative en cours; et
une étape de réception d'un commande d'implication relative audit niveau d'implication dans ladite session applicative souhaité par le deuxième terminal.

8. Procédé d'implication dans au moins une session applicative en cours selon la revendication 7, **caractérisé en ce que** ladite notification d'événement est publiée auprès d'un serveur de présence (SP 120) apte à la transmettre à des terminaux (UE₁) de l'utilisateur y ayant préalablement souscrit.

9. Procédé d'implication dans au moins une session applicative en cours selon la revendication 7, **caractérisé en ce que**, suite à la réception préalable (E₃) d'une demande de souscription à un mécanisme de notification d'événement relatif à un état dudit utilisateur par le premier terminal (UE₁) auprès du deuxième terminal (UE₂), la notification d'événement est envoyée audit premier terminal.

10. Procédé d'implication dans au moins une session applicative en cours selon la revendication 7, **caractérisé en ce que** le procédé comprend une étape (E₂) d'obtention d'informations comprenant une liste d'identifiants de sessions applicative en cours entre ledit utilisateur et le réseau et **en ce que** l'étape (E₄) d'émission d'une information indicatrice d'un niveau d'implication souhaité par le deuxième terminal comprend l'identifiant de la session applicative ciblée.

11. Dispositif d'implication (210) dans au moins une session applicative établie selon le protocole SIP, en cours pour un utilisateur (A) d'un réseau de télécommunications (1), ladite session comprenant des flux média échangés pendant la session applicative et étant contrôlée par un premier terminal (UE₁) dudit utilisateur, **caractérisé en ce que** ledit dispositif, apte à être mis en œuvre par un deuxième terminal (UE₂) dudit utilisateur, comprend des moyens d'émission d'une notification d'événement relatif à l'état de l'utilisateur comprenant au moins une information indicatrice d'un niveau d'implication dans ladite session applicative souhaité par le deuxième terminal, ledit événement étant détecté par le deuxième terminal (UE2) et ladite notification comprenant ledit niveau d'implication dans ladite session applicative concernant au moins un type de flux média de ladite au moins session applicative en cours;
et moyens de réception d'un commande d'implication relative audit niveau d'implication dans ladite session applicative souhaité par le deuxième terminal.

12. Terminal (UE₁, UE₂, UE₃) d'un utilisateur d'un réseau de télécommunications, apte à contrôler au moins une session applicative établie selon le protocole SIP, en cours entre l'utilisateur (A) et ledit réseau de télécommunications (1), **caractérisé en ce qu'**il comprend un dispositif de traitement (220) d'une information indicatrice d'un souhait d'implication dans au moins une session applicative selon la revendication 6. et un dispositif d'implication (210) dans au moins une session applicative en cours selon la revendication 11.

13. Serveur de présence (SP 120) dans un réseau de télécommunications (1), comprenant des moyens de réception d'informations relatives à un utilisateur et publiées par un deuxième terminal dudit utilisateur enregistré dans le réseau, des moyens de stockage desdites informations, des moyens d'enregistrement d'une demande de souscription à une notification d'événement relatif audit utilisateur d'au moins un premier terminal dudit utilisateur et des moyens de notification d'événement relatif à l'état de l'utilisateur dudit premier terminal de l'utilisateur (UE1), **caractérisé en ce qu'**une notification comprend au moins une information indicatrice d'un niveau d'implication souhaité du deuxième terminal (UE₂) dans au moins une session applicative comprenant des flux média échangés pendant ladite session applicative et étant établie selon le protocole SIP, en cours entre le premier terminal (UE1) et le réseau de télécommunications (1), ledit niveau d'implication dans ladite session applicative concernant au moins un type de flux média de ladite au moins session applicative en cours.

14. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de traitement d'un souhait d'implication dans au moins une session applicative en cours selon une revendication de 1 à 5 ou de 7 à 10.

## Patentansprüche

1. Verfahren zum Verarbeiten eines Informationselements, das den Wunsch angibt, an mindestens einer, gemäß SIP-Protokoll eingerichteten, für einen Benutzer (A) eines Telekommunikationsnetzes (1) laufenden Anwendungssitzung beteiligt zu werden, wobei die mindestens eine Sitzung Medienströme umfasst, die während der Anwendungssitzung ausgetauscht werden und von einem ersten Terminal (UE₁) des Benutzers gesteuert werden, **dadurch gekennzeichnet, dass** das Verfahren, das von dem ersten Controller-Terminal implementiert wird, die folgenden Schritte umfasst:
- Empfang (F₂) durch das erste Terminal (UE₁) einer Benachrichtigung über ein Ereignis, das sich auf den Status des Benutzers bezieht, mit mindestens einem Informationselement, das einen von dem zweiten Terminal (UE₂) des Benutzers gewünschten Grad der Beteiligung an der Anwendungssitzung angibt, wobei das Ereignis von dem zweiten Terminal (UE₂) erfasst wird und die Benachrichtigung den Grad der Beteiligung an der Anwendungssitzung umfasst; betreffend mindestens einen Medienstromtyp der mindestens einen laufenden Anwendungssitzung
- Entscheidungsfällung (F₃) darüber, ob dem zweiten Terminal der genannte Grad der Beteiligung an der Anwendungssitzung gewährt werden soll; und
- im Falle einer positiven Entscheidung, den von dem zweiten Terminal gewünschten Grad der Beteiligung an der Anwendungssitzung zu akzeptieren, Senden (F₄) eines Beteiligungsbefehls bezüglich des von dem zweiten Terminal gewünschten Grades der Beteiligung an der Anwendungssitzung an das Telekommunikationsnetz.

2. Verfahren zum Verarbeiten eines Informationselements, das den Wunsch angibt, an einer Anwendungssitzung nach Anspruch 1 beteiligt zu werden, **dadurch gekennzeichnet, dass** das Informationselement einen Wunsch betrifft, das Ziel einer Übertragung von mindestens einem Medienstromtyp zu sein.

3. Verfahren zum Verarbeiten eines Informationselements, das den Wunsch angibt, an einer Anwendungssitzung nach Anspruch 1 beteiligt zu werden, **dadurch gekennzeichnet, dass** das Informationselement einen Wunsch betrifft, die Kontrolle über die mindestens eine laufende Anwendungssitzung zu übernehmen.

4. Verfahren zum Verarbeiten eines Informationselements, das den Wunsch angibt, an einer Anwendungssitzung nach Anspruch 1 beteiligt zu werden, **dadurch gekennzeichnet, dass** nach vorausgehendem Abonnieren (F₁) eines Mechanismus zur Ereignisbenachrichtigung bezüglich eines Status des Benutzers durch das erste Terminal (UE₁) bei einem Anwesenheitsserver (SP 120) des Telekommunikationsnetzes, die Ereignisbenachrichtigung von diesem Anwesenheitsserver empfangen wird.

5. Verfahren zum Verarbeiten eines Informationselements, das den Wunsch angibt, an einer Anwendungssitzung nach Anspruch 1 beteiligt zu werden, **dadurch gekennzeichnet, dass** nach dem Abonnieren (F₁) eines Mechanismus zur Ereignisbenachrichtigung bei dem zweiten Terminal die Ereignisbenachrichtigung von dem zweiten Terminal empfangen wird.

6. Einrichtung (220) zum Verarbeiten eines Informationselements, das den Wunsch angibt, an einer, gemäß SIP-Protokoll eingerichteten, für einen Benutzer eines Telekommunikationsnetzes laufenden Anwendungssitzung beteiligt zu werden, wobei die mindestens eine Sitzung Medienströme umfasst, die während der Anwendungssitzung ausgetauscht werden und von einem ersten Terminal des Benutzers gesteuert werden, **dadurch gekennzeichnet, dass** die Einrichtung, die von dem ersten Controller-Terminal implementiert werden kann, Folgendes umfasst:
- Mittel zum Empfang durch das erste Terminal (UE₁) einer Benachrichtigung über ein Ereignis, das sich auf den Status des Benutzers bezieht, mit mindestens einem Informationselement, das einen von einem zweiten Terminal des Benutzers gewünschten Grad der Beteiligung an der Anwendungssitzung angibt, wobei das Ereignis von dem zweiten Terminal (UE₂) erfasst wird und die Benachrichtigung den Grad der Beteiligung an der Anwendungssitzung umfasst, der mindestens einen Medienstromtyp der mindestens einen laufenden Anwendungssitzung betrifft;
- Mittel zur Entscheidungsfällung darüber, ob dem zweiten Terminal der genannte Grad der Beteiligung an der Anwendungssitzung gewährt werden soll; und
- Mittel zum Senden, im Falle einer positiven Entscheidung, den von dem zweiten Terminal gewünschten Grad der Beteiligung an der Anwendungssitzung zu akzeptieren, eines Beteiligungsbefehls bezüglich des von dem zweiten Terminal gewünschten Grades der Beteiligung an der Anwendungssitzung an das Telekommunikationsnetz.

7. Verfahren zur Beteiligung an mindestens einer, gemäß SIP-Protokoll eingerichteten, für einen Benutzer (A) eines Telekommunikationsnetzes (1) laufenden Anwendungssitzung, wobei die Sitzung Medienströme umfasst, die während der Anwendungssitzung ausgetauscht und von einem ersten Terminal (UE₁) des Benutzers gesteuert werden, **dadurch gekennzeichnet, dass** das Verfahren, das von einem zweiten Terminal (UE₂) des Benutzers implementiert wird, einen Schritt (E₄) des Sendens einer Benachrichtigung über ein Ereignis umfasst, das sich auf den Status des Benutzers bezieht, mit mindestens einem Informationselement, das einen von dem zweiten Terminal gewünschten Grad der Beteiligung an der Anwendungssitzung angibt, wobei das Ereignis von dem zweiten Terminal (UE₂) erfasst wird und die Benachrichtigung den Grad der Beteiligung an der Anwendungssitzung umfasst, der mindestens einen Medienstrom der mindestens einen laufenden Anwendungssitzung betrifft; und
einen Schritt zum Empfang eines Beteiligungsbefehls, der sich auf den von dem zweiten Terminal gewünschten Grad der Beteiligung an der Anwendungssitzung bezieht.

8. Verfahren zur Beteiligung an mindestens einer laufenden Anwendungssitzung nach Anspruch 7, **dadurch gekennzeichnet, dass** die Ereignisbenachrichtigung an einen Anwesenheitsserver (SP 120) ausgegeben wird, der sie an Terminals (UE₁) des Benutzers, welcher diese zuvor abonniert hat, übertragen kann.

9. Verfahren zur Beteiligung an mindestens einer laufenden Anwendungssitzung nach Anspruch 7, **dadurch gekennzeichnet, dass** nach dem vorausgehenden Empfang (E₃) einer Anfrage zum Abonnieren eines Mechanismus zur Ereignisbenachrichtigung bezüglich eines Status des Benutzers durch das erste Terminal (UE₁) bei dem zweiten Terminal (UE₂) die Ereignisbenachrichtigung an das erste Terminal gesendet wird.

10. Verfahren zur Beteiligung an mindestens einer laufenden Anwendungssitzung nach Anspruch 7, **dadurch gekennzeichnet, dass** das Verfahren einen Schritt (E₂) des Erhalts von Informationselementen umfasst, welche eine Liste von Zugangsdaten zu laufenden Anwendungssitzungen zwischen dem Benutzer und dem Netz umfasst, und dass der Schritt (E₄) der Übermittlung von Informationselementen, welche einen von dem zweiten Terminal gewünschten Grad der Beteiligung angeben, die Zugangsdaten der angestrebten Anwendungssitzung umfasst.

11. Einrichtung zur Beteiligung (210) an mindestens einer, gemäß SIP-Protokoll eingerichteten, für einen Benutzer (A) eines Telekommunikationsnetzes (1) laufenden Anwendungssitzung, wobei die Sitzung Medienströme umfasst, die während der Anwendungssitzung ausgetauscht werden, und
von einem ersten Terminal (UE₁) des Benutzers gesteuert wird, **dadurch gekennzeichnet, dass** die Einrichtung, die von einem zweiten Terminal (UE₂) des Benutzers implementiert werden kann, Mittel zum Senden einer Benachrichtigung über ein Ereignis umfasst, das sich auf den Status des Benutzers bezieht, mit mindestens einem Informationselement, das einen von dem zweiten Terminal gewünschten Grad der Beteiligung an der Anwendungssitzung angibt, wobei das Ereignis von dem zweiten Terminal (UE₂) erfasst wird und die Benachrichtigung den Grad der Beteiligung an der Anwendungssitzung umfasst, der mindestens einen Medienstromtyp der mindestens einen laufenden Anwendungssitzung betrifft;
und Mittel zum Empfang eines Beteiligungsbefehls, der sich auf den von dem zweiten Terminal gewünschten Grad der Beteiligung an der Anwendungssitzung bezieht.

12. Terminal (UE₁, UE₂, UE₃) eines Benutzers eines Telekommunikationsnetzes, das in der Lage ist, mindestens eine gemäß SIP-Protokoll eingerichtete, für einen Benutzer (A) eines Telekommunikationsnetzes (1) laufenden Anwendungssitzung zu steuern, **dadurch gekennzeichnet, dass** es eine Einrichtung zum Verarbeiten (220) eines Informationselements umfasst, welches den Wunsch angibt, an mindestens einer Anwendungssitzung gemäß Anspruch 6 beteiligt zu werden, und eine Einrichtung zur Beteiligung (210) an mindestens einer laufenden Anwendungssitzung gemäß Anspruch 11 umfasst.

13. Anwesenheitsserver (SP 120) in einem Telekommunikationsnetz (1), umfassend Mittel zum Empfangen von Informationselementen, die sich auf einen Benutzer beziehen und von einem zweiten, in dem Netz registrierten Terminal des Benutzers veröffentlicht werden, Mittel zum Speichern dieser Informationselemente, Mittel zum Registrieren einer Anforderung zum Abonnieren einer benutzerspezifischen Ereignisbenachrichtigung von mindestens einem ersten Terminal des Benutzers, und Mittel zum Benachrichtigen über ein Ereignis, das sich auf den Status des Benutzers dieses ersten Terminals des Benutzers bezieht (UE₁), **dadurch gekennzeichnet, dass** eine Benachrichtigung mindestens ein Informationselement umfasst, das einen gewünschten Grad der Beteiligung des zweiten Terminals (UE₂) an mindestens einer Anwendungssitzung angibt, mit Medienströmen, die während der Anwendungssitzung ausgetauscht werden und gemäß dem zwischen dem ersten Terminal (UE₁) und dem Telekommunikationsnetz (1) laufenden SIP-Protokoll eingerichtet werden, wobei der Grad der Beteiligung an der Anwendungssitzung mindestens einen Medienstromtyp der mindestens einen laufenden Anwendungssitzung betrifft.

14. Computerprogrammprodukt, das von einem Kommunikationsnetz herunterladbar ist und/oder auf einem computerlesbaren und/oder durch einen Mikroprozessor auslesbaren Träger gespeichert werden kann, **dadurch gekennzeichnet, dass** es Programmcodebefehle für die Ausführung des Verfahrens zum Verarbeiten eines Wunsches zur Beteiligung an mindestens einer laufenden Anwendungssitzung gemäß einem Anspruch von 1 bis 5 oder von 7 bis 10 umfasst.

## Claims

1. A method for processing one piece of information indicative of a desire to be involved in at least one applicative session established according to the SIP protocol, ongoing for a user (A) of a telecommunications network (1), said at least one session comprising media streams exchanged during the applicative session and being controlled by a first terminal (UE₁) of said user, **characterised in that** said method, implemented by the first controller terminal, comprises the following steps of:
- receiving (F₂) by the first terminal (UE₁) a notification of event relating to the status of the user, comprising at least one piece of information indicative of a level of involvement in said applicative session desired by the second terminal (UE₂) of said user, said event being detected by the second terminal (UE₂) and said notification comprising said level of involvement in said applicative session; regarding at least one media stream type of said at least one ongoing applicative session
- making a decision (F₃) as to whether to grant to the second terminal said level of involvement in said applicative session; and
- in case of a favourable decision to accept said level of involvement in said applicative session desired by the second terminal, sending (F₄) a command of involvement relating to said level of involvement in said applicative session desired by the second terminal to the telecommunications network.

2. The method for processing one piece of information indicative of a desire to be involved in an applicative session according to claim 1, **characterised in that** said information regards a desire to be the target of a transfer of at least one media stream type.

3. The method for processing one piece of information indicative of a desire to be involved in an applicative session according to claim 1, **characterised in that** said information regards a desire to take control of said at least one ongoing applicative session.

4. The method for processing one piece of information indicative of a desire to be involved in an applicative session according to claim 1, **characterised in that**, further to previously subscribing (F₁) to a notification mechanism of event relating to a status of the user by the first terminal (UE₁) at a presence server (SP 120) of the telecommunications network, the notification of event is received from said presence server.

5. The method for processing one piece of information indicative of a desire to be involved in an applicative session according to claim 1, **characterised in that**, further to subscribing (F₁) to a notification mechanism of event at the second terminal, the notification of event is received from the second terminal.

6. A device (220) for processing one piece of information indicative of a desire to be involved in an applicative session established according to the SIP protocol, ongoing for a user of a telecommunications network, said at least one session comprising media streams exchanged during the applicative session and being controlled by a first terminal of said user, **characterised in that** said device, able to be implemented by the first controller terminal, comprises :
- means for receiving by the first terminal (UE₁) a notification of event relating to the status of the user, comprising at least one piece of information indicative of a level of involvement in said applicative session desired by a second terminal of said user, said event being detected by the second terminal (UE₂) and said notification comprising said level of involvement in said applicative session regarding at least one media stream type of said at least one ongoing applicative session;
- means for making a decision, as to whether to grant to the second terminal said level of involvement in said applicative session; and
- means for sending, in the case of a favourable decision to accept said level of involvement in said applicative session desired by the second terminal, a command of involvement relating to said level of involvement in said applicative session desired by the second terminal to the telecommunications network.

7. A method for involving in at least one applicative session established according to the SIP protocol, ongoing for a user (1) of a telecommunications network (1), said session comprising media streams exchanged during the applicative session and being controlled by a first terminal (UE₁) of said user, **characterised in that** said method, implemented by a second terminal (UE₂) of said user, comprises a step (E₄) of transmitting a notification of event relating to the status of the user comprising at least one piece of information indicative of a level of involvement in said applicative session desired by the second terminal, said event being detected by the second terminal (UE2) and said notification comprising said level of involvement in said applicative session regarding at least one media stream type of said at least one ongoing applicative session; and
a step of receiving a command of involvement relating to said level of involvement in said applicative session desired by the second terminal.

8. The method for involving in at least one ongoing applicative session according to claim 7, **characterised in that** said notification of event is published at a presence server (SP 120) able to transmit it to terminals (UE₁) of the user having previously subscribed thereto.

9. The method for involving in at least one ongoing applicative session according to claim 7, **characterised in that**, further to previously receiving (E₃) a request to subscribe to a notification mechanism of event relating to a status of said user by the first terminal (UE₁) at the second terminal (UE₂), the notification of event is sent to the first terminal.

10. The method for involving in at least one ongoing applicative session according to claim 7, **characterised in that** the method comprises a step (E₂) of obtaining information comprising a list of identifiers of ongoing applicative sessions between said user and the network and **in that** the step (E₄) of transmitting information indicative of a level of involvement desired by the second terminal comprises the identifier of the targeted applicative session.

11. A device for being involved (210) in at least one applicative session established according to the SIP protocol, ongoing for a user (A) of a telecommunications network (1), said session comprising media streams exchanged during the applicative session and being controlled by a first terminal (UE₁) of said user, **characterised in that** said device, able to be implemented by a second terminal (UE₂) of said user, comprises means for transmitting a notification of event relating to the status of the user, comprising at least one piece of information indicative of a level of involvement in said applicative session desired by the second terminal, said event being detected by the second terminal (UE₂) and said notification comprising said level of involvement in said applicative session regarding at least one media stream type of said at least one ongoing applicative session;
and means for receiving a command of involvement relating to said level of involvement in said applicative session desired by the second terminal.

12. A terminal (UE₁, UE₂, UE₃) of a user of a telecommunications network, able to control at least one applicative session established according to the SIP protocol, ongoing between the user (A) and said telecommunications network (1), **characterised in that** it comprises a device for processing (220) one piece of information indicative of a desire to be involved in at least one applicative session according to claim 6, and a device for involving (210) in at least one ongoing applicative session according to claim 11.

13. A presence server (SP 120) in a telecommunications network (1), comprising means for receiving information relating to a user and published by a second terminal of said user registered in the network, means for storing said information, means for registering a request to subscribe to a notification of event relating to said user of at least one first terminal of said user and means for notifying an event relating to the status of the user of said first terminal of the user (UE1), **characterised in that** a notification comprises at least one piece of information indicative of a desired level of involvement of the second terminal (UE₂) in at least one applicative session comprising media streams exchanged during said applicative session and being established according to the SIP protocol, ongoing between the first terminal (UE1) and the telecommunications network (1), said level of involvement in said applicative session regarding at least one media stream type of said at least one ongoing applicative session.

14. A computer program product downloadable from a communication network and/or stored on a computer readable medium and/or executable by a microprocessor, **characterised in that** it comprises program code instructions for executing the method for processing a desire to be involved in at least one ongoing applicative session according to one of claims 1 to 5 or 7 to 10.
